# EUROPÄISCHE PATENTANMELDUNG

(11) **EP 1 529 662 A1**
(43) Veröffentlichungstag der Anmeldung: **11.05.2005**
(21) Anmeldenummer: 04104649.1
(22) Anmeldetag: 24.09.2004
(51) Int. Cl.: B60C 11/12

(54) **Fahrzeugluftreifen**

(30) Priorität: 04.11.2003 DE 10352146
(71) Anmelder: Continental Aktiengesellschaft, 30165 Hannover (DE)
(72) Erfinder: Diensthuber, Franz, 30167, Hannover (DE); Heine, Stefan, 30163, Hannover (DE)

(57) **Zusammenfassung**

Die Erfindung betrifft einen Fahrzeugluftreifen, insbesondere für den Einsatz unter winterlichen Fahrbedingungen, mit einem Laufstreifen, welcher durch Umfangsnuten, Quernuten, Rillen und dergleichen in Profilpositive gegliedert ist, welche mit einer Vielzahl von zumindest im Wesentlichen in Profilquerrichtung verlaufenden wellenförmigen und sich zueinander parallel erstreckenden Einschnitten (7, 8) versehen sind.

Die Amplitude (a, b, c) der Wellenform der Einschnitte (7, 8) nimmt in einer der Erstreckungsrichtungen der Einschnitte (7, 8) zu.

## Beschreibung

Die Erfindung betrifft einen Fahrzeugluftreifen, insbesondere für den Einsatz unter winterlichen Fahrbedingungen, mit einem Laufstreifen, welcher durch Umfangsnuten, Quernuten, Rillen und dergleichen in Profilpositive gegliedert ist, welche mit einer Vielzahl von zumindest im Wesentlichen in Profilquerrichtung verlaufenden, wellenförmigen und sich zueinander parallel erstreckenden Einschnitten versehen sind.

Es ist seit längerem üblich, PKW - Winterreifen mit Laufstreifen zu versehen, deren Profilpositive, Profilblöcke und Laufstreifenbänder, jeweils mit einer Vielzahl von sinus- oder wellenförmigen Einschnitten versehen sind. Wellenförmige Einschnitte sind vor allem dazu gut geeignet, die Griffeigenschaften des Laufstreifens auf winterlichen Fahrbahnen, auf Schnee, Schneematsch oder Eis, zu verbessern und bewirken durch ihre Form auch einen gewissen versteifenden Effekt. Ein Fahrzeugluftreifen der eingangs genannten Art ist beispielsweise aus der EP 0 669 216 B1 bekannt. Der Laufstreifen des Reifen ist asymmetrisch gestaltet und zwar derart, dass er, auf das Fahrzeug bezogen, einen Laufstreifeninnen- und einen abweichend gestalteten Laufsteifenaußenabschnitt aufweist. In der Schulterblockreihe, die im Laufstreifeninnenabschnitt vorgesehen ist, sind Einschnitte angeordnet, die treppen- oder sägezahnförmig gestaltet sind. In der Schulterblockreihe, die im Laufstreifenaußenabschnitt vorgesehen ist, sind wellenoder zick-zack-förmige Einschnitte angeordnet. Durch die Ausgestaltung der Einschnitte wird im Außenschulterbereich des Reifens die Profilsteifigkeit unter Querkraftbeanspruchung erhöht, im Laufstreifeninnenbereich ist zur Übertragung von Traktionskräften sichergestellt, dass möglichst viele Griffkanten zur Verfügung stehen.

Es ist ferner üblich, die Einschnitte in Profilpositiven, beispielsweise in Schulterblöcken, zu Randbereichen an der Umfangsnut seichter auszuführen. Diese Maßnahme versteift das Profilpositiv in diesem Bereich. Die Versteifung durch die Anhebungen wirkt jedoch vor allem bei Umfangskräften.

Der Erfindung liegt die Aufgabe zu Grunde, einen Reifen der eingangs genannten Art mit wellenförmigen Einschnitten im Laufstreifen bei einwirkenden Querkräften zu versteifen und unter Erhalt guter Griffeigenschaften die Handlingeigenschaften zu verbessern.

Gelöst wird die gestellte Aufgabe erfindungsgemäß dadurch, dass die Amplitude der Wellenform der Einschnitte in einer der Erstreckungsrichtungen der Einschnitte zunimmt.

In Bereichen mit großer oder größerer Amplitude versteifen die wellenförmigen Einschnitte das betreffende Profilpositiv, einen Block oder ein Laufstreifenband, stärker als in jenen Bereichen, in welchen die Amplitude klein bzw. kleiner ist. Durch eine erfindungsgemäße Einschnittausgestaltung kann daher auf die Steifigkeit des Profilpositivs und damit auf das Verhalten des Profilpositivs beim Auftreten von Umfangs- oder Querkräften gezielt Einfluss genommen werden. Eine stärker ausgeprägte Schwingung der Wellenform der Einschnitte, d.h. eine höhere Amplitude, bewirkt eine stärker ausgeprägte Abstützung, welche vor allem die Handlingeigenschaften verbessert.

Gemäß einer bevorzugten Ausführungsform der Erfindung weisen die Einschnitte ihre größte Amplitude an ihren den Umfangsnuten zugewandten Endabschnitten auf. Diese Maßnahme versteift die Profilpositive an Randbereichen zu Umfangsnuten, was insbesondere bei schulterseitig angeordneten Profilpositiven, bei Schulterblockreihen, von Vorteil ist, um auf den Reifen wirkenden Querkräften entgegenwirken zu können.

In Profilpositiven, die im mittleren oder zentralen Bereich des Laufstreifens angeordnet sind, ist es günstig, wenn die Einschnitte ihre größte Amplitude an ihren in Umfangsnuten einmündenden Endabschnitten aufweisen. Durch diese Maßnahme werden solche Profilpositive im Bereich beider Umfangsnuten versteift.

Die Amplitude der wellenförmigen Einschnitte kann nun entweder stufen- bzw. schrittweise oder kontinuierlich zunehmen. Die Biegesteifigkeit der Profilpositive wird vor allem dann vorteilhaft beeinflusst, wenn mit der Amplitude auch die Wellenlänge zunimmt.

Zu große Änderungen der Amplitude und auch der Wellenlänge der Einschnitte sollte vermieden werden, um einen gleichmäßigen Abrieb des Laufstreifens zu gewährleisten. In diesem Zusammenhang ist es von Vorteil, wenn die kleinste Amplitude zwischen 35% und 60% der größten Amplitude beträgt und wenn die zu einer Welle mit einer bestimmten Amplitude gehörende Wellenlänge mindestens dem zweifachen Wert dieser Amplitude entspricht.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf eine Teilabwicklung eines Bereiches eines Laufstreifens eines Fahrzeugluftreifens,
Fig. 2 ein Detail aus Fig. 1 in vergrößerter Darstellung und
Fig. 3 eine Draufsicht auf einen erfindungsgemäß ausgeführten Einschnitt.

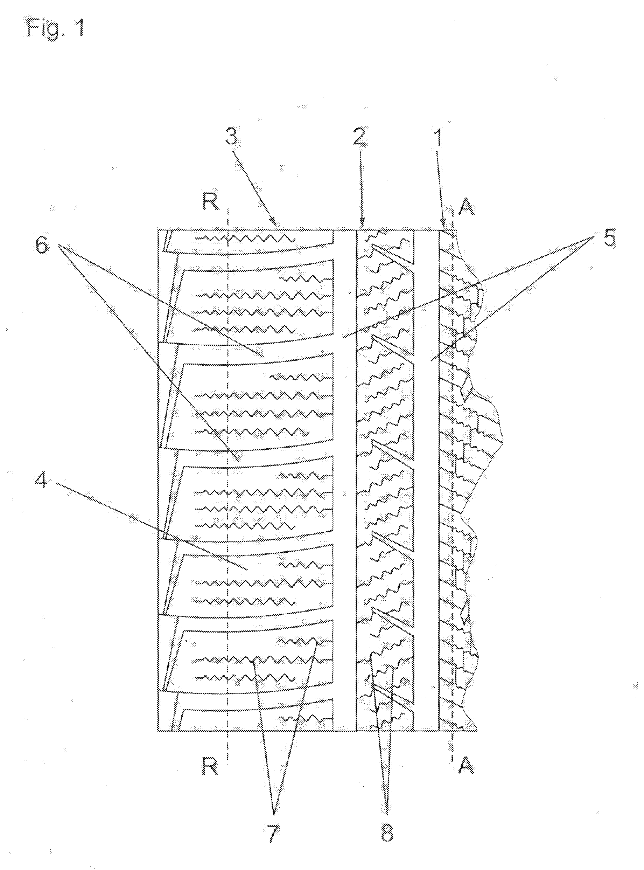

Der in Fig. 1 gezeigte Teilbereich eines Laufstreifens umfasst ein entlang der Äquatorlinie A-A umlaufendes zentrales Laufstreifenband 1, welches nur zum Teil dargestellt ist, ein von diesem durch eine gerade und in Umfangsrichtung umlaufende Umfangsnut 5 getrenntes weiteres, durch ausgeprägte Sacknuten 2a strukturiertes Laufstreifenband 2 sowie eine schulterseitig gelegene, durch eine weitere gerade Umfangsnut 5 vom Laufstreifenband 2 getrennte Schulterblockreihe 3 bestehend aus Blöcken 4. In Umfangsrichtung sind die einzelnen Schulterblöcke 4 durch Quernuten 6 voneinander getrennt.

Das Laufstreifenband 2 und die Schulterblöcke 4 sind durch besonders ausgeführte sinus- bzw. wellenförmige Einschnitte 7, 8 strukturiert. Die Einschnitte 7, 8 weisen eine Breite zwischen 0,4 und 0,7 mm auf, ihre Tiefe beträgt bei neuem Reifen zwischen 1,5 mm und Dessintiefe, welche üblicherweise zwischen 7 und 9 mm gewählt wird.

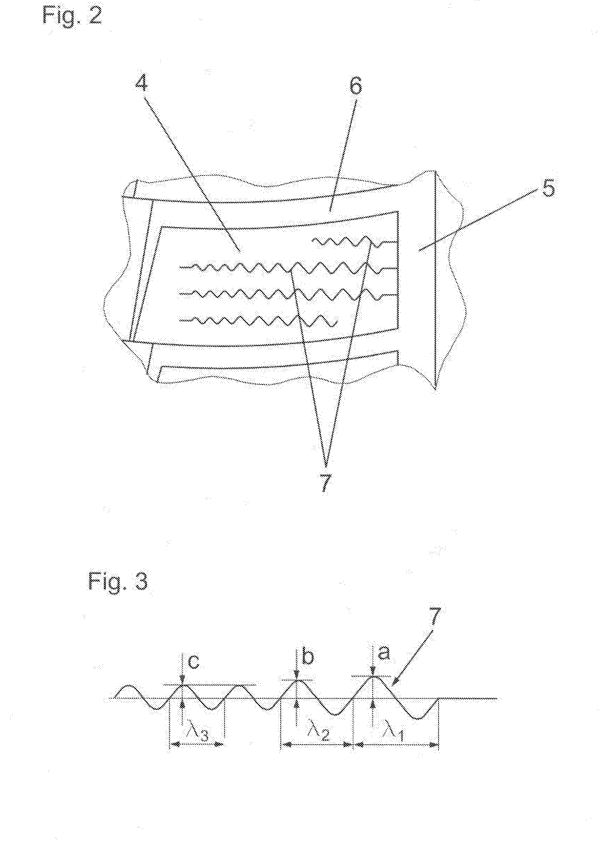

Wie Fig. 2 anhand eines Schulterblockes 4 zeigt, welcher mit vier wellenförmigen Einschnitten 7 versehen ist, sind die Einschnitte 7 untereinander im Wesentlichen gleich beabstandet. Der Abstand der Einschnitte 7 zu den Quernuten 6 liegt etwa in der Größenordnung ihres gegenseitigen Abstandes oder ist etwas geringer als dieser. Die Erstreckungsrichtung der wellenförmigen Einschnitte 7 entspricht bei der gezeigten Ausführungsform der Querrichtung und demnach annähernd dem Verlauf der Quernuten 6. Von der dargestellten Orientierung sind abweichende Orientierungen möglich, wobei die Einschnitte 7 vorzugsweise zumindest im Wesentlichen in Querrichtung des Laufstreifens verlaufen sollten. Von den dargestellten wellenförmigen Einschnitten 7 münden drei in die Umfangsnut 5. Der vierte Einschnitt 7 endet bereits vor dem Laufstreifenrand (Linie R-R), die zwei mittig verlaufenden Einschnitte 7 reichen über den Laufstreifenrand (Linie R-R) hinaus, der erwähnte vierte Einschnitt 7 beginnt in einem Abstand vor der Umfangsnut 5 und reicht mit seinem anderen Ende über den Laufstreifenrand (Linie R-R) genauso weit hinaus wie die beiden mittig angeordneten Einschnitte 7. Für die Erfindung ist nur jener Bereich der Einschnitte 7 von Belang, welcher innerhalb der Aufstandsbreite (Linie R-R) des Reifens liegt.

Die Einschnitte 7 haben eine besondere Wellenform, die vor allem aus Fig. 3 ersichtlich ist. Zumindest die Amplitude, insbesondere aber auch die Wellenlänge der Einschnitte 7 nimmt in eine Richtung, bei den Einschnitten 7 im Block 4 mit zunehmender Entfernung der Einschnitte 7 vom Laufstreifenrand R-R, demnach in Richtung Umfangsnut 5, zu. Diese Zunahme kann kontinuierlich oder schrittförmig erfolgen. Bei einer schrittförmigen Zunahme weisen die Wellen der Einschnitte 7 mindestens zwei unterschiedliche Amplituden auf. Fig. 3 zeigt einen Einschnitt 7 mit drei unterschiedlich großen Amplituden a, b, c. Im Bereich des Laufstreifenrandes (Linie R-R) weisen die Wellen die kleinste Amplitude c auf, die zwischen 35% und 60% der größten Amplitude a beträgt, die im Bereich einer oder mehrerer Wellen am anderen Ende des Einschnittes 7 vorliegt. Bei der dargestellten Ausführungsform weist der wellenförmige Einschnitt 7 über zumindest eine Wellenlänge eine Amplitude b mittlerer Größe auf, welche zwischen 65% und 85% der größten Amplitude a beträgt. In Laufstreifen von PKW-Reifen wird die Amplitude a in einer Größenordnung von 1,0 mm bis 2,0 mm gewählt. Mit der Amplitude vergrößert sich bevorzugt auch die Wellenlänge. Die größte Wellenlänge λ₁ im Bereich jener Welle bzw. Wellen, welche die größte Amplitude a besitzen, beträgt mindestens das Zweifache der Amplitude a, die Wellenlänge λ₂ im Bereich der Welle(n) mit der mittleren Amplitude b beträgt ebenfalls mindestens das Zweifache von b und für die Wellenlänge λ₃ der Welle(n) mit der kleinsten Amplitude c gilt Analoges. Dabei kann es zwischen den Wellen mit der kleinsten und mit der größten Amplitude c, a noch weitere Abstufungen in der Amplitude und in der Wellenlänge geben.

Mit erfindungsgemäß ausgeführten Einschnitten 7 versehene Schulterblöcke 4 sind somit in ihrem Mittelbereich weicher als im Bereich der Umfangsnut 5. In diesem Bereich können sich die Blockrandbereiche durch die stärker ausgeführte Sinusschwingung gegeneinander gut abstützen. Dadurch können die Handlingeigenschaften des Reifens bei sehr guten Griffeigenschaften auf winterlichen Fahrbahnen deutlich verbessert werden.

Die mit erfindungsgemäß ausgeführten Einschnitten 7 erzielbare gegenseitige Abstützung von Bereichen in Profilpositiven kann auch in Laufstreifenbändern vorteilhaft sein, wie es im Laufstreifenband 2 gezeigt ist. Im Laufstreifenband 2 sind wellenförmige Einschnitte 8 mit übereinstimmenden Erstreckungsrichtungen angeordnet, wobei einige der wellenförmigen Einschnitte 8 in die eine Umfangsnut 5, andere in die andere Umfangsnut 5 einmünden. Dabei kann eine wechselnde Anordnung getroffen werden. Die anderen Endbereiche der wellenförmigen Einschnitte 8 enden in einem geringen Abstand von den Umfangsnuten 5 oder den Sacknuten 2a. Die wellenförmigen Einschnitten 8 sind erfindungsgemäß ausgeführt, insbesondere nimmt ihre Amplitude von ihren einen Endbereichen ausgehend auf erfindungsgemäße Weise, wie oben beschrieben, zu. Auch die Wellenlänge der Einschnitte 8 kann, wie oben beschrieben, variieren. Die in Umfangsnuten 5 einmündenden wellenförmigen Einschnitte 8 weisen nahe der Umfangsnuten 5 ihre größte Amplitude auf und versteifen dadurch das Laufstreifenband 2 vorteilhaft.

Die Erfindung ist auf die dargestellten Ausführungsbeispiele nicht eingeschränkt. So kann eine erfindungsgemäße Einschnittausgestaltung mit einer herkömmlichen kombiniert werden. Der Laufstreifen kann mit anderen Profilpositiven, beispielsweise nur mit Blockreihen, strukturiert sein. Erwähnt sei ferner, dass es von besonderem Vorteil ist, wenn Profilpositive mit erfindungsgemäß ausgeführten wellenförmigen Einschnitten in jenen Bereichen des Laufstreifens eines Reifens angeordnet werden, welcher bei montiertem Reifen der Fahrzeugaußenseite zugewandt ist. Die in Fig. 1 gezeigte Schulterblockreihe 3 wäre dann bei montiertem Reifen an der Fahrzeugaußenseite.

## Patentansprüche

1. Fahrzeugluftreifen, insbesondere für den Einsatz unter winterlichen Fahrbedingungen, mit einem Laufstreifen, welcher durch Umfangsnuten, Quernuten, Rillen und dergleichen in Profilpositive gegliedert ist, welche mit einer Vielzahl von zumindest im Wesentlichen in Profilquerrichtung verlaufenden wellenförmigen und sich zueinander parallel erstreckenden Einschnitten versehen sind,
**dadurch gekennzeichnet,**
**dass** die Amplitude (a, b, c) der Wellenform der Einschnitte (7, 8) in einer der Erstreckungsrichtungen der Einschnitte (7, 8) zunimmt.

2. Fahrzeugluftreifen nach Anspruch 1, **dadurch gekennzeichnet, dass** die Einschnitte (7, 8) ihre größte Amplitude an ihren Umfangsnuten (5) zugewandten Endabschnitten aufweisen.

3. Fahrzeugluftreifen nach Anspruch 1 oder 2, **dadurch gekennzeichnet, dass** die Einschnitte (7, 8) ihre größte Amplitude an ihren in Umfangsnuten (5) einmündenden Endabschnitten aufweisen.

4. Fahrzeugluftreifen nach einem der Ansprüche 1 bis 3, **dadurch gekennzeichnet, dass** die Amplitude (a, b, c) der wellenförmigen Einschnitte (7, 8) zumindest in zwei Stufen zunimmt.

5. Fahrzeugluftreifen nach einem der Ansprüche 1 bis 3, **dadurch gekennzeichnet, dass** die Amplitude der wellenförmigen Einschnitte (7, 8) kontinuierlich zunimmt.

6. Fahrzeugluftreifen nach einem der Ansprüche 1 bis 5, **dadurch gekennzeichnet, dass** mit der Amplitude (a, b, c) auch die Wellenlänge (λ₁, λ₂, λ₃) zunimmt.

7. Fahrzeugluftreifen nach einem der Ansprüche 1 bis 6, **dadurch gekennzeichnet, dass** die kleinste Amplitude (c) zwischen 35% und 60% der größten Amplitude (a) beträgt.

8. Fahrzeugluftreifen nach einem der Ansprüche 1 bis 7, **dadurch gekennzeichnet, dass** die wellenförmigen Einschnitte (7) zumindest drei unterschiedlich große Amplituden (a, b, c) aufweisen, wobei die mittlere(n) Amplitude(n) (b) 65% bis 85% der größten Amplitude (a) beträgt bzw. betragen.

9. Fahrzeugluftreifen nach einem der Ansprüche 1 bis 8, **dadurch gekennzeichnet, dass** die zu einer Welle mit einer bestimmten Amplitude (a, b, c) gehörende Wellenlänge (λ₁, λ₂, λ₃) mindestens dem zweifachen Wert dieser Amplitude (a, b, c) entspricht.
